# EUROPÄISCHE PATENTSCHRIFT

(11) **EP 1 636 055 B1**
(45) Veröffentlichungstag und Bekanntmachung des Hinweises auf die Patenterteilung: **07.02.2007**
(21) Anmeldenummer: 04733778.7
(22) Anmeldetag: 19.05.2004
(51) Int. Cl.: B60H 1/00

(54) **BASISMODUL FÜR MEHRERE SENSOREINHEITEN**
BASE MODULE FOR A PLURALITY OF SENSOR UNITS
MODULE DE BASE DESTINE A PLUSIEURS UNITES DE CAPTEURS

(30) Priorität: 07.06.2003 DE 10325971
(43) Veröffentlichungstag der Anmeldung: 22.03.2006
(73) Patentinhaber: E+E ELEKTRONIK GES.M.B.H., 4209 Engerwitzdorf (AT)
(72) Erfinder: HARTL, Josef, A-4040 Linz (AT)
(74) Vertreter: Hofmann, Ernst
(86) Internationale Anmeldenummer: PCT/EP2004/005396
(87) Internationale Veröffentlichungsnummer: WO 2004/108447

(56) Entgegenhaltungen:
- EP-A- 1 285 790
- WO-A-01/58731
- WO-A-03/025481
- US-B1- 6 347 746
- US-B1- 6 422 062
- PATENT ABSTRACTS OF JAPAN Bd. 0113, Nr. 27 (M-635), 24. Oktober 1987 (1987-10-24) & JP 62 110521 A (MATSUSHITA ELECTRIC IND CO LTD), 21. Mai 1987 (1987-05-21)

## Beschreibung

Die vorliegende Erfindung betrifft ein Basismodul für mehrere Sensoreinheiten, wobei das Basismodul mindestens zum Aufbau einer Sensoreinheit zur Anordnung auf einer Kraftfahrzeug-Scheibe wie auch zum Aufbau einer Sensoreinheit zur Anordnung in einem Lüftungskanal eines Kraftfahrzeugs geeignet ist. Im erstgenannten Fall werden über die Messung von relativer Feuchte und Temperatur bzw. die Bestimmung des Taupunktes Maßnahmen zur Beschlagsverhinderung ergriffen, im zweiten Fall dient die erfolgende Messung von relativer Feuchte und Temperatur bzw. die Bestimmung des Taupunktes zur Regelung der Innenraum-Klimaanlage.

In modernen Kraftfahrzeugen gibt es heutzutage eine Reihe von Anwendungen für Sensoreinheiten, die zumindest Feuchte- und Temperatursensorelemente umfassen, wobei die Sensoreinheiten je nach Anwendung an bestimmten Stellen des Kraftfahrzeuges angeordnet sind. Die von den Sensoreinheiten erzeugten Ausgangssignale wiederum werden im Rahmen unterschiedlichster Steuer- und Regelungsapplikationen benötigt. Grundsätzlich liefern entsprechende Sensoreinheiten als Ausgangssignale entweder unmittelbar Messwerte bzgl. relativer Feuchte und Temperatur oder aber bzgl. des aktuellen Taupunktes. Im letztgenannten Fall erfolgt demzufolge bereits eine Signalvorverarbeitung der ermittelten Feuchte- und Temperaturmesswerte auf Seiten der Sensoreinheit.

Zu erwähnen wäre beispielsweise die Anordnung entsprechender Sensoreinheiten an der Innenseite von Kraftfahrzeug-Scheiben, um über die gelieferten Messwerte bzgl. des aktuellen Beschlagszustandes die erforderlichen Gegenmaßnahmen mittels der Heizungs-, Lüftungs- und/oder Klimaanlage einzuleiten. Zu diesem Zweck geeignete Sensoreinheiten sind beispielsweise aus der WO 01/58731 der Anmelderin oder aber aus der EP 1 306 276 oder aus der US 6 422 061 A2 bekannt.

Eine weitere typische Applikation derartiger Sensoreinheiten in Kraftfahrzeugen betrifft den Einsatz in einem Lüftungskanal der Klimaanlage, um die gelieferten Messwerte zur Regelung der Innenraum-Klimaanlage einzusetzen. Derartige Sensoreinheiten werden beispielsweise von der Anmelderin unter der Typenbezeichnung EE04 vertrieben (siehe hierzu Datenblatt Serie EE04).

Wie aus den genannten Dokumenten zu den beiden Applikationen ersichtlich ist, werden für diese Anwendungen bis dato unterschiedliche Bauformen entsprechender Sensoreinheiten eingesetzt. Pro Bauform ergeben sich damit als Konsequenz erhöhte Entwicklungs- und Fertigungskosten im Vergleich zur Verwendung einer gemeinsamen Bauform für die beiden unterschiedlichen Applikationen. Eine identische Sensoreinheit-Bauform für beide Applikationen lässt sich jedoch nicht angeben, da signifikante Unterschiede in den Anordnungsgegebenheiten, den messtechnischen Anforderungen sowie bzgl. der Umweltbedingungen vorliegen.

Aufgabe der vorliegenden Erfindung ist es, eine Lösung zu schaffen, die eine einfache Realisierung mehrerer unterschiedlicher Sensoreinheiten für den Kraftfahrzeugbereich ermöglicht, wobei die Sensoreinheiten entweder zur Messung von relativer Feuchte und Temperatur oder zur Taupunkt-Bestimmung geeignet sind.

Die angegebene Aufgabe wird gelöst durch ein Basismodul für mehrere Sensoreinheiten mit den Merkmalen des Anspruches 1.

Vorteilhafte Ausführungsformen des erfindungsgemäßen Basismoduls ergeben sich aus den Maßnahmen, die in den von Anspruch 1 abhängigen Patentansprüchen aufgeführt sind.

Gegenstand der Patentsprüche 9 und 12 sind jeweils spezifische Sensoreinheiten, in denen das erfindungsgemäße Basismodul zum Einsatz kommt.

Erfindungsgemäß wird ein Basismodul geschaffen, mittels dem mindestens zwei unterschiedliche Sensoreinheiten für den Einsatz im Kraftfahrzeugbereich aufgebaut werden können und über die entweder die Messung von relativer Feuchte und Temperatur oder aber die Taupunkt-Bestimmung möglich ist. Möglich ist der Aufbau einer ersten Sensoreinheit, die an einer Kraftfahrzeugscheibe angeordnet wird und über die beschlagsverhindernde Maßnahmen eingeleitet werden können sowie einer zweiten Sensoreinheit, die in einem Lüftungskanal eines Kraftfahrzeuges angeordnet ist und über deren Ausgangssignale eine Regelung der Innenraum-Klimaanlage erfolgt.

Bedeutsam für die Verwendung zur Beschlagsverhinderung ist hierbei auf Seiten des erfindungsgemäßen Basismoduls, dass frontseitig eine plane Auflagefläche vorhanden ist, die die Anordnung auf der Kraftfahrzeugscheibe ermöglicht und die für diese Anwendung wichtige thermische Ankopplung der Sensoreinheit an die Kraftfahrzeugscheibe gewährleistet. Im Hinblick auf den Einsatz der Sensoreinheit in einem Lüftungskanal ist wiederum wichtig, dass eine Schutzkappe frontseitig am Basismodul montierbar ist, die in dieser Anwendung das Trägerelement, die verwendeten Sensorelemente und ggf. die Auswerteelektronik vor eindringendem Wasser bzw. Schmutz schützt. Beide Anforderungen lassen sich in Verbindung mit dem erfindungsgemäßen Basismodul erfüllen.
Vorteilhaft erweist sich ferner, das erfindungsgemäße Basismodul auf der Rückseite mit geeigneten Befestigungsmitteln auszustatten, die für alle Applikationen die Befestigung der jeweiligen Sensoreinheit an geeigneten Montageorten im Kraftfahrzeug ermöglicht.

Durch einfachste, zusätzliche Anpassungsmaßnahmen lässt sich nunmehr das erfindungsgemäße Basismodul zur jeweils erforderlichen Sensoreinheit erweitern. Für die zumindest zwei genannten Applikationen steht somit ein Basismodul zur Verfügung, das sich aufgrund höherer Anwendungsstückzahlen auch kostengünstiger fertigen lässt, als wenn etwa vollkommen unterschiedliche Komplett-Varianten von Sensoreinheiten für die unterschiedlichen Applikationen zum Einsatz kämen.

Weitere Vorteile sowie Einzelheiten der vorliegenden Erfindung ergeben sich aus der nachfolgenden Beschreibung eines Ausführungsbeispieles und zweier Applikationsvarianten anhand der beiliegenden Figuren.

Dabei zeigt
- Figur 1: eine schematisierte seitliche Schnittansicht einer möglichen Ausführungsform des erfindungsgemäßen Basismoduls;
- Figur 2: eine schematisierte Schnittansicht einer Sensoreinheit mit einer Ausführungsvariante des erfindungsgemäßen Basismoduls, geeignet zur Anordnung an einer Kraftfahrzeugscheibe;
- Figur 3: eine schematisierte Schnittansicht einer Sensoreinheit mit einer Ausführungsvariante des erfindungsgemäßen Basismoduls, geeignet zur Anordnung in einem Lüftungskanal eines Kraftfahrzeugs.

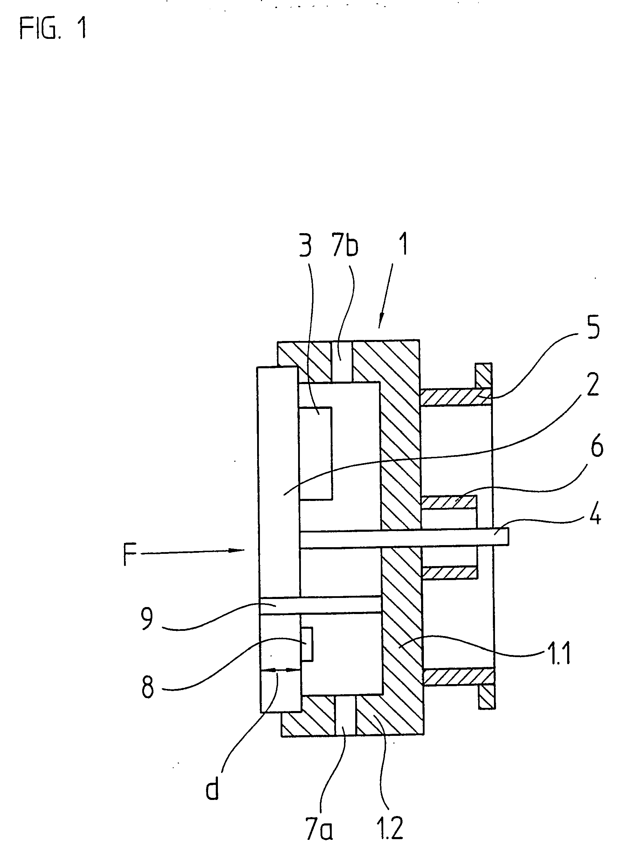

In Figur 1 ist ein Ausführungsbeispiel des erfindungsgemäßen Basismoduls in einer seitlichen Schnittansicht dargestellt. Das Basismodul besteht aus einem Gehäuse 1, das an einer Frontseite F durch ein planes Trägerelement 2 begrenzt ist. Das Gehäuse 1 wird aus einer im vorliegenden Beispiel ebenfalls planen Gehäuse-Rückseite 1.1 und Gehäuse-Seitenwänden 1.2 gebildet. In.den Gehäuse-Seitenwänden 1.2 befinden sich mehrere Öffnungen 7a, 7b, die eine Luftzirkulation durch das Gehäuse 1 in zumindest einer der nachfolgenden Applikationen ermöglichen. In der Draufsicht besitzt das Gehäuse 1 im vorliegenden Ausführungsbeispiel einen kreisförmigen Querschnitt, alternativ können selbstverständlich auch andere geometrische Querschnittsformen in Betracht kommen, beispielsweise quadratische, rechteckige etc.. Als Material für das Gehäuse 1 wird beispielsweise PP (Polypropylen) gewählt.

Das an der Frontseite F des Gehäuses 1 angeordnete plane Trägerelement 2 ist als handelsübliche Leiterplatte aus FR4-Material ausgebildet, und dient zur Anordnung von verschiedenen Bauelementen und den zur elektrischen Kontaktierung derselben nötigen Leiterbahnen. Das Trägerelement 2 ist über den Stift 9 mit dem Gehäuse 1 verschweißt; alternativ wäre auch eine Verklebung mit dem Gehäuse 1 realisierbar.

Von den auf dem Trägerelement 2 angeordneten Bauelementen ist in der Darstellung der Figur 1 lediglich ein Feuchtesensorelement 3 sowie ein Temperatursensorelement 8 erkennbar, nicht dargestellt sind aus Übersichtlichkeitsgründen weitere Bauelemente zur Signalverarbeitung bzw. Signalausgabe sowie die Leiterbahnen zur elektrischen Kontaktierung und Verbindung dieser Elemente. Die Sensorelemente 3, 8 sind in der dargestellten Ausführungsform hierbei auf derjenigen Seite des Trägerelementes 2 angeordnet, die in Richtung des Gehäuses 1 bzw. des Gehäuse-Innenraumes orientiert ist. Als vorteilhaft erweist sich eine Anordnung des Feuchtesensorelementes 3 über einer Ausnehmung des Trägerelementes 2, wie dies etwa aus der WO 01/58731 der Anmelderin bekannt ist und auf die an dieser Stelle ausdrücklich verweisen sei. Grundsätzlich wären im Rahmen der vorliegenden Erfindung aber auch alternative Anordnungsvarianten des Feuchtesensorelementes auf dem Trägerelement 2 realisierbar.

Das Feuchtesensorelement 3 ist vorzugsweise als bekannter kapazitiver Dünnschicht-Feuchtesensor ausgebildet, bei dem sich zwischen zwei Elektroden ein Dielektrikum - beispielsweise ein geeignetes Polymer - befindet, das feuchteabhängig seine Kapazität ändert. Die Elektroden und das Dielektrikum sind wiederum auf einem Glas- oder Keramik-Trägersubstrat angeordnet. Ausgangsseitig liefert das Feuchtesensorelement 3 Signale, die ein Maß für die relative Feuchte in der jeweiligen Umgebung darstellen. Geeignete Feuchtesensorelemente 3 werden von der Anmelderin z.B. unter der Typenbezeichnung HC103, HC104 oder HC 101 vertrieben.

Ebenfalls in bekannter Art und Weise ist das Temperatursensorelement 8 ausgebildet, beispielsweise als glasgekapselte NTC-Elemente, wie sie z.B. von den Firmen *EPCOS AG* oder *VISHAY* angeboten werden

Lediglich schematisiert angedeutet ist in Figur 1 ferner die elektrische Kontaktierung des Trägerelementes 2 bzw. der darauf angeordneten Bauelemente. Hierzu ist das Trägerelement 2 mit einer elektrischen Verbindungsleitung 4 versehen. Im Ausführungsbeispiel wird die Verbindungsleitung 4 durch eine Öffnung in der Gehäuse-Rückseite 1.1 geführt und kann an der Außenseite über eine geeignete Steckverbindung mit einer Folgeelektronik verbunden werden. Hierzu ist an der Außenseite des Gehäuses ein Teil 6 einer entsprechenden Steckverbindung vorgesehen. Alternativ hierzu könnte auch ein Kabel oder Flexleiter vom Trägerelement 2 direkt zur Folgeelektronik geführt werden.
Über derartige Verbindungs-Varianten lässt sich das erfindungsgemäße Basismodul somit lösbar mit einer Folgeelektronik verbinden, in der die generierten Signale zu Steuer- und Regelungszwecken weiterverarbeitet werden. Wie bereits eingangs erwähnt, können an die Folgeelektronik beispielsweise die Messwerte bzgl. relativer Feuchte und Temperatur ausgegeben werden; alternativ kann im Fall einer geeigneten Signalverarbeitung bereits auf Seiten des Basismoduls eine Taupunktsbestimmung und die Ausgabe eines entsprechenden Signals erfolgen.

Auf der nach außen orientierten Seite der Gehäuse-Rückseite 1.1 ist neben dem Steckverbindungsteil 6 ferner ein mechanisches Befestigungsmittel 5 angeordnet, über das das Gehäuse 1 bzw. das Basismodul an einem geeigneten - nicht dargestellten - Trägerbauteil lösbar montiert werden kann. Im vorliegenden Beispiel handelt es sich beim Befestigungsmittel 5 um einen Teil eines Bajonettverschlusses. Grundsätzlich kann an dieser Stelle jedoch auch ein alternatives mechanisches Befestigungsmittel vorgesehen sein, das die lösbare Montage des Gehäuses und damit des gesamten Basismoduls im Rahmen der jeweiligen Applikation an einem geeigneten Trägerbauteil ermöglicht. Beispielsweise eignet sich hierzu auch eine angepasste Schnappbefestigung.

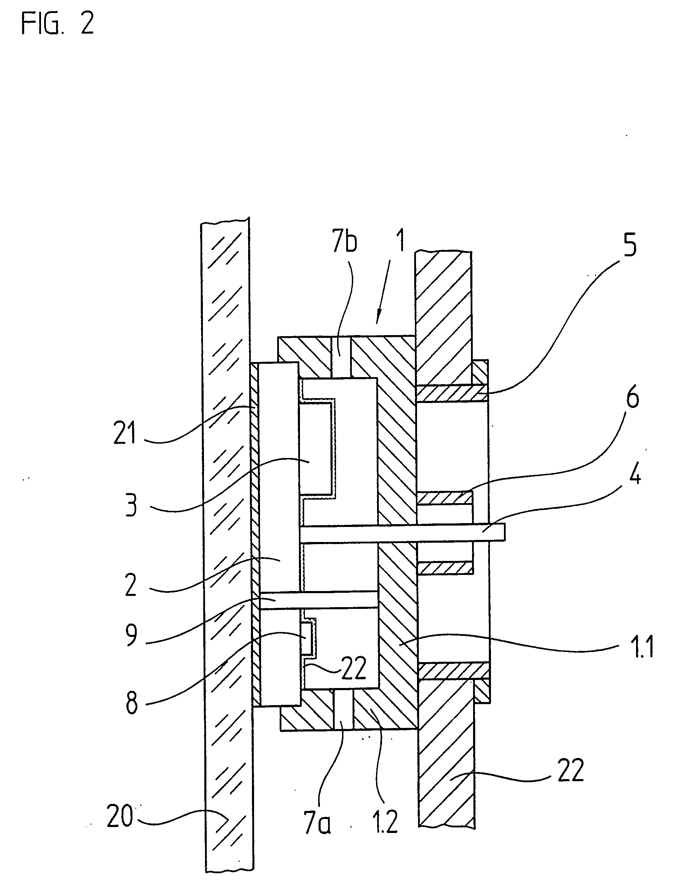

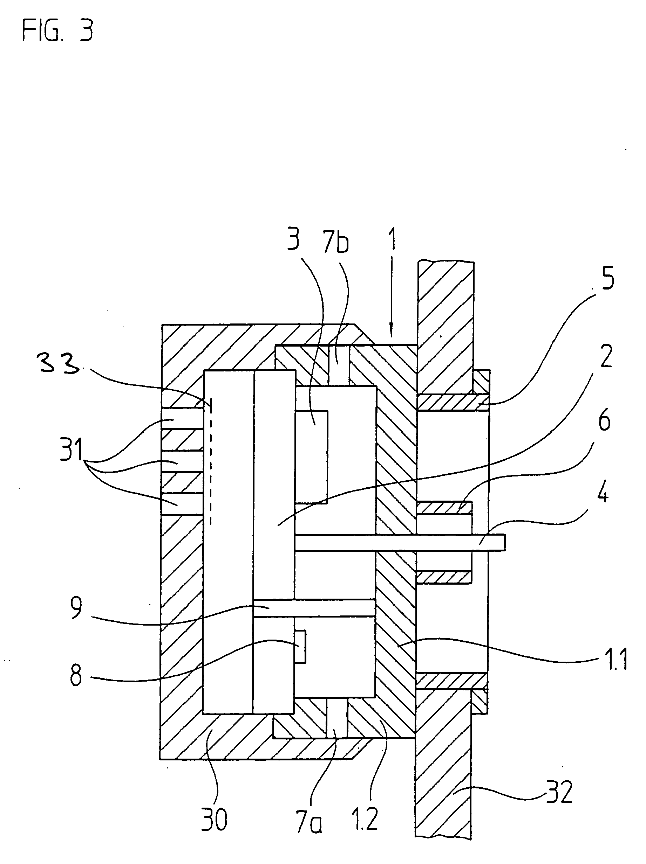

Das dargestellte erfindungsgemäße Basismodul eignet sich nunmehr als Grundeinheit bzw. Plattform für mindestens zwei verschiedene, damit aufbaubare Sensoreinheiten, nämlich für eine Sensoreinheit zur Anordnung auf einer Kraftfahrzeugscheibe wie auch zum Aufbau einer Sensoreinheit zur Anordnung in einem Lüftungskanal eines Kraftfahrzeuges. Damit eine Eignung des Basismoduls für zumindest die beiden genannten Typen von Sensoreinheiten gewährleistet ist, sind auf Seiten des Basismoduls bestimmte Maßnahmen vorgesehen. In Bezug auf den Ausbau des Basismoduls zu den beiden genannten Sensoreinheiten sei auf die später folgende Beschreibung der Figuren 2 und 3 verwiesen.

Bzgl. der Verwendung in einer Sensoreinheit zur Anordnung an bzw. auf einer Kraftfahrzeugscheibe zur Beschlagsverhinderung ist insbesondere wichtig, dass das Basismodul an seiner Frontseite F möglichst plan ist, so dass die Frontseite F auf der entsprechenden Kraftfahrzeugscheibe möglichst großflächig anliegt und derart die erforderliche thermische Ankopplung des Feuchtesensorelementes 3 und des Temperatursensorelementes 8 an die -scheibe gewährleistet ist. Aus diesem Grund wird wie oben erläutert ein möglichst planes Trägerelement 2 verwendet und die erforderlichen Bauelemente auf der Seite des Trägerelementes 2 angeordnet, die zur Gehäuse-Innenseite hin orientiert ist. Ferner ist im vorliegenden Ausführungsbeispiel vorgesehen, dass das Trägerelement 2 auf einem Absatz der Gehäuse-Seitenwände 1.2 aufliegt, so dass in Verbindung mit der gewählten Dicke d des Trägerelementes 2 sichergestellt ist, dass die Frontfläche des Trägerelementes 2 die Gehäuse-Seiteriwände 1.2 überragt und demzufolge die frontseitige Begrenzung des Basismoduls tatsächlich durch das Trägerelement 2 gebildet wird. Auf diese Art und Weise ist der für diese Applikation erforderliche gute thermische Kontakt des Trägerelementes 2 bzw. der darauf angeordneten Sensorelemente 3, 8 mit der Kraftfahrzeugscheibe gewährleistet.

Um das erfindungsgemäße Basismodul auch zu einer Sensoreinheit aufrüsten zu können, die in einem Lüftungskanal eines Kraftfahrzeuges angeordnet wird, sind Maßnahmen erforderlich, um insbesondere das Trägerelement 2 und die darauf befindlichen Bauelemente vor Wasser und Verschmutzung zu schützen. Es ist deshalb auf Seiten des Basismodules vorgesehen, das Gehäuse 1 und hier insbesondere dessen Frontbereich F und die entsprechenden Bereiche der Gehäuse-Seitenwände 1.2 mit den darin befindlichen Öffnungen 7a. 7b derart auszubilden, dass sich eine zumindest teilweise luftdurchlässige Schutzkappe über dem Trägerelement 2 lösbar montieren lässt. Die Schutzkappe sorgt in dieser Applikation für den gewünschten Schutz vor dem Eindringen von Wasser und Schmutz über den Frontbereich F bzw. die Öffnungen 7a, 7b in der Gehäuse-Seitenwand 1.2.

Aufgrund der erläuterten Maßnahmen lässt sich das erfindungsgemäße Basismodul als Plattform für mindestens die beiden genannten Sensoreinheiten einsetzen; in beiden Fällen sind zum Aufbau kompletter Sensoreinheiten jeweils noch bestimmte applikationsspezifische Zusatzmaßnahmen erforderlich. Entsprechende Beispiele derartiger Sensoreinheiten inklusive der jeweiligen Zusatzmaßnahmen seien nachfolgend anhand der Figuren 2 und 3 erläutert. In beiden Figuren wird das identische Basismodul aus Figur 1 verwendet, weshalb für identische Teile in diesen Figuren auch die gleichen Bezugszeichen verwendet werden.
So zeigt Figur 2 in schematisierter Form eine Sensoreinheit, die auf dem oben beschriebenen Basismodul aufgebaut ist und an der Innenseite einer Kraftfahrzeugscheibe 20 montiert ist, um die an dieser Stelle herrschenden klimatischen Bedingungen zur Beschlagsverhinderung zu erfassen. Ferner dargestellt ist in Figur 2 ein Trägerbauteil 22, an dem die Sensoreinheit über das Befestigungsmittel 5 des Basismoduls lösbar angeordnet sind. Beispielsweise kann über das als Bajonettverschluss ausgebildete Befestigungsmittel 5 eine Montage dieser Sensoreinheit am Fußteil eines Rückspiegels vorgesehen werden oder über eine alternative Konstruktion gegen die Kraftfahrzeugscheibe 20 gedrückt werden. Des Weiteren ist zwischen der Kraftfahrzeugscheibe 20 und der in dieser Richtung orientierten Außenseite des Trägerelementes 2 eine wärmeleitfähige Folie 21 angeordnet, die für die oben diskutierte thermische Kopplung von Kraftfahrzeugscheibe 22 und Feuchtesensorelement 3 sorgt. Hierzu eignet sich beispielsweise eine Wärmeleitfolie der Firma 3M, die unter der Bezeichnung *Type* 9890 vertrieben wird. Ferner ist im dargestellten Ausführungsbeispiel vorgesehen, auf der der Scheibe abgewandten Seite des Trägerelementes 2 eine feuchtendurchlässige Schutzschicht 22 aufzubringen, um derart die dort angeordneten Bauteile vor Verschmutzung zu schützen.

In Figur 3 ist schließlich die schematisierte Schnittansicht einer Sensoreinheit dargestellt, wiederum basierend auf dem oben diskutierten Basismodul, wie sie z.B. im Lüftungskanal eines Kraftfahrzeugs montiert werden kann. Lediglich schematisch angedeutet ist erneut ein Trägerbauteil 32, das im Lüftungskanal angeordnet ist und an dem die Sensoreinheit über die Befestigungsmittel 5, respektive den Bajonettverschluss, des Basismoduls lösbar montiert ist.

Ferner erkennbar in Figur 2 ist die frontseitig am Basismodul lösbar montierte Schutzkappe 30. Dies weist im gezeigten Ausführungsbeispiel in einem Teilbereich mehrere Öffnungen 31 auf, wobei in diesem Teilbereich auf der Innenseite der Schutzkappe wiederum eine luftdurchlässige Membran 33 angeordnet ist. Die Anordnung der Schutzkappe muss hierbei dergestalt erfolgen, dass die Öffnungen 7a, 7b in der Gehäusewand 1.2 in dieser Anwendung dicht verschlossen sind. Über die Schutzkappe 30 ist somit gewährleistet, dass die Bauelemente auf dem Trägerelement 2 vor eventuell eindringendem Wasser und Schmutz geschützt werden. Gleichzeitig ist durch die zumindest teilweise Luftdurchlässigkeit der Membran 33 aber gewährleistet, dass über die Sensorelemente 3, 8 die gewünschten Messungen im Lüftungskanal erfolgen können. Als geeignetes Material für die Schutzkappe 30 erweist sich etwa PP (Polypropylen), die Membran 33 kann beispielsweise aus einer Goretexfolie bestehen.

Selbstverständlich gibt es insbesondere bzgl. der Geometrie des erfindungsgemäßen Basismoduls als auch der resultierenden Sensoreinheiten alternative Ausgestaltungsmöglichkeiten, die allesamt im Rahmen der vorliegenden Erfindung liegen können.

## Patentansprüche

1. Basismodul für mehrere Sensoreinheiten, wobei das Basismodul mindestens zum Aufbau einer Sensoreinheit zur Anordnung auf einer Kraftfahrzeug-Scheibe wie auch zum Aufbau einer Sensoreinheit zur Anordnung in einem Lüftungskanal eines Kraftfahrzeugs geeignet ist, bestehend aus einem Gehäuse (1), das an einer Frontseite (F) durch ein planes Trägerelement (2) begrenzt ist und auf dem mindestens ein Feuchtesensorelement (3) sowie ein Temperatursensorelement (8) angeordnet ist **dadurch gekennzeichnet dass** das Trägerelement (2) auf einem Absatz der Gehäuse-Seitenwände (1.2) aufliegt und eine Dicke (d) dergestalt aufweist, dass die Frontseite (F) des Trägerelementes (2) die Gehäuse-Seitenwände (1.2) überragt, wobei das Gehäuse (1) an der Frontseite (F) derart ausgebildet ist, dass eine zumindest teilweise luftdurchlässige Schutzkappe (30) über dem Trägerelement (2) lösbar montierbar ist.

2. Basismodul nach Anspruch 1, wobei das Feuchtesensorelement (3) über einer Ausnehmung auf derjenigen Seite des Trägerelementes (2) angeordnet ist, die in Richtung des Gehäuse-Innenraumes orientiert ist.

3. Basismodul nach Anspruch 1, wobei das Feuchtesensorelement (3) und das Temperatursensorelement (8) mit auf dem Trägerelement (2) angeordneten elektrischen Signalleitungen verbunden ist und auf dem Trägerelement (2) noch weitere elektrische Bauelemente angeordnet sind.

4. Basismodul nach Anspruch 3, wobei die Gehäuse-Rückseite (1.1) eine Öffnung zur elektrischen Kontaktierung des Trägerelementes (2) und der darauf angeordneten Bauelemente aufweist.

5. Basismodul nach Anspruch 4, wobei auf der Gehäuse-Rückseite (1.1) zumindest ein elektrisches Steckverbindungsteil (6) angeordnet ist.

6. Basismodul nach Anspruch 1, wobei auf der Gehäuse-Rückseite (1.1) Befestigungsmittel (5) zur lösbaren Montage des Gehäuses (1) an einem Trägerbauteil (22, 32) angeordnet sind.

7. Basismodul nach Anspruch 6, wobei die Befestigungsmittel (6) als Teil eines Bajonettverschlusses ausgebildet sind.

8. Basismodul nach Anspruch 1, wobei das Gehäuse (1) ein oder mehrere Öffnungen (7a, 7b) aufweist.

9. Sensoreinheit mit einem Basismodul nach mindestens einem Ansprüche 1 - 8 und einer darauf angeordneten Schutzkappe (30), wobei die Schutzkappe mindestens in einem Teilbereich Öffnungen (31) aufweist und in diesem Teilbereich eine luftdurchlässige Membran (32) angeordnet ist.

10. Basismodul nach Anspruch 8 und 9, wobei die Öffnungen (7a, 7b) derart in den Gehäuse-Seitenwänden (1.2) angeordnet sind, dass sie im Fall der montierten Schutzkappe (30) von dieser verschließbar sind.

11. Sensoreinheit nach Anspruch 9, montiert in einem Lüftungskanal eines Kraftfahrzeuges.

12. Sensoreinheit mit einem Basismodul nach mindestens einem der Ansprüche 1 - 8 und einer auf der Frontseite (F) des Trägerelementes (2) angeordneten wärmeleitfähigen Folie (21).

13. Sensoreinheit nach Anspruch 12, montiert unmittelbar auf einer Kraftfahrzeugscheibe (20), wobei die Frontseite (F) des Trägerelementes (2) über die wärmeleitfähige Folie (21) in direktem Kontakt mit der Kraftfahrzeugscheibe (20) ist.

14. Sensoreinheit nach Anspruch 13, wobei die der Kraftfahrzeugscheibe (20) abgewandte Seite des Trägerelementes (2) mit den darauf angeordneten Bauelementen mit einer Schutzschicht (22) überzogen ist.

## Claims

1. A base module for a plurality of sensor units, wherein the base module is at least adapted for mounting a sensor unit for arrangement on a vehicle window, also for mounting a sensor unit for arrangement in an air channel of a motor vehicle, consisting of a housing (1) which is bounded on a front side (F) by a planar support element (2) and on which is arranged at least a humidity sensor element (3) and a temperature sensor element (8), **characterized in that** the support element (2) is mounted on a shoulder of the housing sidewalls (1.2) and has a thickness (d) such that the front side (F) of the support element (2) projects beyond the housing sidewalls (1.2), wherein the housing (1) is so formed at the front side (F) that an at least partially air-permeable protective cap (30) can be mounted over the support element (2).

2. A base module according to claim 1, wherein the humidity sensor element (3) is arranged over a recess on that side of the support element (2) which is orientated in the direction of the housing interior.

3. A base module according to claim 1, wherein the humidity sensor element (3) and the temperature sensor element (8) are connected to electrical signal lines disposed on the support element (2) and further electrical components are arranged on the support element (2).

4. A base module according to claim 3, wherein the rear side (1.1) of the housing has an opening for electrically contacting the support element (2) and the components arranged thereon.

5. A base module according to claim 4, wherein at least one electrical plug connector part (6) is arranged on the housing rear side (1.1).

6. A base module according to claim 1, wherein fixing means (5) for releasably mounting the housing (1) on a supporting component (22, 32) are arranged on the housing rear side (1.1).

7. A base module according to claim 6, wherein the fixing means (6) are formed as part of a bayonet connector.

8. A base module according to claim 1, wherein the housing (1) has one or more openings (7a, 7b).

9. A sensor unit with a base module according to at least one of claims 1 - 8 and a protective cap (30) arranged thereon, wherein the protective cap has openings (31) at least on a partial region and a air-permeable membrane (32) is arranged in this partial region.

10. A base module according to claims 8 and 9, wherein the openings (7a, 7b) are so arranged in the housing sidewalls (1.2) that they can be closed by the protective cap (30) when this is mounted.

11. A sensor unit according to claim 9, mounted in an air channel of a motor vehicle.

12. A sensor unit with a base module at least one of claims 1 - 8 and a heat conducting film (21) arranged on the front side (F) of the support element (2).

13. A sensor unit according to claim 12 mounted directly on a motor vehicle window (20), wherein the front side (F) of the support element (2) is in direct contact through the heat conducting film (21) with the motor vehicle window (20).

14. A sensor unit according to claim 13, wherein the side of the support element (2) facing away from the motor vehicle window (20) is covered, together with the components mounted thereon, by a protective layer (22).

## Revendications

1. Module de base destiné à plusieurs unités de capteurs, qui est approprié à la réalisation d'une unité de capteurs pour montage sur une vitre de véhicule automobile et également d'une unité de capteurs pour montage dans un canal d'aération d'un véhicule automobile et qui est composé d'un boîtier (1) délimité sur une face frontale (F) par un élément porteur (2) plan sur lequel est disposé au moins un élément capteur d'humidité (3) et un élément capteur de température (8), **caractérisé en ce que** l'élément porteur (2) repose sur un gradin des parois latérales (1.2) du boîtier (1) et présente une épaisseur (d) telle que sa face frontale (F) fait saillie sur les parois latérales (1.2), cette face frontale (F) étant configurée de manière à permettre le montage amovible sur l'élément porteur (2) d'un capot de protection (30) perméable au moins en partie à l'air.

2. Module de base selon la revendication 1, **caractérisé en ce que** l'élément capteur d'humidité (3) est disposé par l'intermédiaire d'un évidement sur la face de l'élément porteur (2) qui est en regard du volume interne du boîtier.

3. Module de base selon la revendication 1, **caractérisé en ce que** l'élément capteur d'humidité (3) et l'élément capteur de température (8) sont reliés à des conducteurs électriques de signaux disposés sur l'élément porteur (2), et sur celui-ci sont montés également d'autres composants électriques.

4. Module de base selon la revendication 3, **caractérisé en ce que** la face arrière (1.1) du boîtier présente une ouverture pour assurer le contact électrique de l'élément porteur (2) et des composants disposés sur celui-ci.

5. Module de base selon la revendication 4, **caractérisé en ce que** sur la face arrière (1.1) du boîtier se trouve au moins un élément (6) de liaison électrique par enfichage.

6. Module de base selon la revendication 1, **caractérisé en ce que** sur la face arrière (1.1) du boîtier sont montés des moyens de fixation (5) permettant le montage amovible du boîtier (1) sur un composant porteur (32).

7. Module de base selon la revendication 6, **caractérisé en ce que** les éléments de fixation (5) sont constitués par une partie d'un verrouillage à baïonnette.

8. Module de base selon la revendication 1, **caractérisé en ce que** le boîtier (1) présente une ou plusieurs ouvertures (7a, 7b).

9. Unité de capteurs comportant un module de base selon au moins une des revendications 1 à 8 et, monté sur ce module, un capot de protection (30) qui présente au moins dans une zone partielle des ouvertures (31) ainsi qu'une membrane perméable à l'air (33) disposée dans cette zone partielle.

10. Module de base selon les revendications 8 et 9, **caractérisé en ce que** les ouvertures (7a, 7b) sont disposées dans les parois latérales (1.2) du boîtier, de manière à être fermées par le capot de protection (30) dans le cas où celui-ci est monté.

11. Unité de capteurs selon la revendication 9, montée dans un canal d'aération d'un véhicule automobile.

12. Unité de capteurs comportant un module de base selon au moins une des revendications 1 à 8 et une pellicule (21) conductrice de la chaleur montée sur la face frontale (F) de l'élément porteur (2).

13. Unité de capteurs selon la revendication 12, montée directement sur une vitre (20) d'un véhicule automobile, la face frontale (F) de l'élément porteur (2) étant en contact avec la vitre (20) par l'intermédiaire de la pellicule conductrice de chaleur (21).

14. Unité de capteurs selon la revendication 13, dans laquelle le côté de l'élément porteur (2) éloigné de la vitre (20) du véhicule automobile, avec les composants montés sur lui, est recouvert par une couche de protection (22).
